# EUROPEAN PATENT APPLICATION

(11) **EP 2 837 865 A2**
(43) Date of publication of application: **18.02.2015**
(21) Application number: 14179662.3
(22) Date of filing: 04.08.2014
(51) Int. Cl.: F16K 31/53, F16K 31/04

(54) **A bidirectional blockage-free gear-driven shutoff valve for gas meter purpose**

(30) Priority: 14.08.2013 CN 201320496858 U
(71) Applicant: Chengdu Qinchuan Technology Development Co., Ltd., Chengdu, Sichuan (CN)
(72) Inventor: Shao, Zehua, Chengdu (CN)
(74) Representative: Stuttard, Garry Philip

(57) **Abstract**

The present invnetion discloses a bidirectional blockage-free gear-driven shutoff valve for gas meter purpose, and belongs to an electromechanical valve for gas meter including an outer housing in which an inner housing (4) is installed; a motor (1), a gear box (2) and a valve rod (3) are installed in the inner housing (4); a ratchet duplex gear and an incomplete gear are also installed in the gear box; the ratchet duplex gear is meshed with driving gear and the incomplete gear respectively; the incomplete gear is configured with a eccentric shaft which inserts into the connecting hole at the end of the valve rod (3); seal ring (5) of a static seal and a reinforcement dynamic seal are utilized for the motor (1), which avoid corrosion of motor coil by natural gas and improve the safety of the electromechanical valve; the ratchet duplex gear is added in the gear box (2) to match locking and unlocking between the incomplete gear and locking piece, and can realize the completely unloading during forward rotation and reverse rotation of the motor (1), and to realize blockage-free when open/close the valve; therefore, it is possible to improve the operational reliability of electromechanical valve, reduce the power consumption of electromechanical valve and increase its service life.

## Description

The present utility model relates to an electromechanical valve for gas meter, more specifically, the present utility model mainly relates to a bidirectional blockage-free gear-driven shutoff valve for gas meter purpose.

The shutoff valve of intelligent gas meter, as the control unit of intelligent gas meter, can manage and control the gas of user by open/close of shutoff valve. In intelligent gas meter, the shutoff valve will close and alarm in cases of using up of pre-ordered gas, no power of battery, metering performance of gas meter interfered by strong magnetic field, lower pressure of gas meter, abnormal large and small flow leak, and using gas for too long time etc. when communicating with seismic sensor and gas leak alarm, the intelligent gas meter can realize the functions of seismic and gas leak alarm to ensure user safety; the gas will be normally supplied after fault is corrected. It helps families and enterprises manage their own use of gas, prevents emergency and big bills, not only ensure the normal gas supply and gas safety for user, but also avoid loss of gas company. In intelligent gas meter, the intelligent gas meter is terminal sensor and shutoff valve is the core control unit, the open/close of shutoff valve is controlled by information exchange of sensor, so as to ensure the convenient, correct and safe use of gas for user and correct, reliable and controllable sale of gas for gas company.

The shutoff valves of intelligent gas meter currently available in market are mainly of screw drive type and worm drive type. The screw drive shutoff valve controls its open/close by using motor rotation shaft to pass the kinetic energy to drive screw and push the drive nut and sealing cap to move; the worm drive shutoff valve controls its open/close by using motor rotation shaft to pass the kinetic energy to drive worm and push the drive nut and sealing cap to move. Both shutoff valves have disadvantages such as excess current of switching valve, short service life and unreliability of switching valve, which cause unreliable valve control of intelligent gas meter, inconvenience and potential risk for user and loss for gas company. Therefore, it is necessary to further improve the structure of shutoff valve for intelligent gas meter.

One purpose of the invention is to provide a bidirectional blockage-free gear-driven shutoff valve for gas meter purpose to overcome the advantages mentioned above, so as to solve technical problems in existing technologies including that anti-locked rotation structure of drive gear in electromechanical valve cannot fully realize bidirectional unloading and motor coil tends to be corroded by natural gas.

To solve the aforementioned technical problems, the invention adopts the following technical proposals:
The bidirectional blockage-free gear-driven shutoff valve for gas meter purpose provided by the invention includes outer housing in which inner housing is installed; the motor, a gear box and a valve rod are installed inside of the inner housing; one end of the valve rod is equipped with sealing cap, another end is equipped with connecting hole; input gear, output gear and driving gear are installed in the gear box; the output shaft of the motor is coupled to the input gear which is dynamically connected to output gear through multi-stage drive gears, which is used to increase and transmit the power of input gear to output gear through multiple drive gears; the output gear is also dynamically connected to driving gear through drive shaft; a ratchet duplex gear and a incomplete gear are installed in the gear box; the ratchet duplex gear is meshed with driving gear and incomplete gear respectively; the incomplete gear is equipped with eccentric shaft which inserts into the connecting hole at the end of valve rod; locking piece is also installed in the gear box; the locking piece is engaged with ratchet duplex gear, which is used to prevent reverse rotation of ratchet duplex gear; reset device is installed on both locking piece and incomplete gear.

For optimization, the further technical proposal is: the motor is sealed and installed inside of the inner housing and top cap is seal-installed with the gear box, and the top cap is sealed on gear box; the drive shaft is seal-connected to the driving gear.

Further on technical proposal is: the motor is static seal-connected to the inside of the housing by seal ring.

Further on technical proposal is: the output shaft of the motor extends into a gear box and a seal ring is installed between output shaft of motor and gear box; the drive shaft is installed on the top cap of gear box by seal ring and dynamically connected to driving gear.

Further on technical proposal is: the ratchet duplex gear consists of ratchet fixed on the gear; the locking piece is engaged with ratchet which is meshed with incomplete gear and driving gear respectively.

Further on technical proposal is: the ratch on the ratchet inclines counter-clockwise, which allows it only to rotate clockwise after engaged with locking piece.

Further on technical proposal is: the reset device installed on the locking piece and incomplete gear is torsion spring, which is used to keep the locking piece engaged with ratchet duplex gear and make the incomplete gear automatically reset under non-meshed state.

Compared to current technologies, one of the advantages of the invention is: the motor adopts static seal ring and reinforced dynamic seal, which completely seal the motor in outer housing to avoid corrosion of motor coil by natural gas and improve the safety of electromechanical valve; a ratchet duplex gear is added in gear box to coordinate with locking and unlocking of incomplete gear and locking piece; it can be completely unloaded during positive and negative rotation of motor and eliminate locked rotation during open and close of valve; therefore, it improves the use reliability of electromechanical valve, reduces the energy consumption of electromechanical valve and increases its service life; meanwhile, the bidirectional blockage-free gear-driven shutoff valve for gas meter purpose provided by the invention has simple structure and can be widely installed and applied on gas meters of various structures.
Figure 1 is an overall structural schematic diagram illustrating one embodiment of the present utility model;
Figure 2 is a schematic diagram illustrating the first split surface of a gear box in one embodiment of the present utility model;
Figure 3 is a schematic diagram illustrating the second split surface of a gear box in one embodiment of the present utility model;
Figure 4 is a schematic diagram illustrating a reinforcement dynamic seal of driving gear and drive shaft gear box in another embodiment of the present utility model;

Where, 1-motor, 2-gear box, 21-input gear, 22-output gear, 23-driving gear, 24-driven gear, 25-drive shaft, 26-ratchet duplex gear, 27-incomplete gear, 271-eccentric shaft, 28-locking piece, 29-reset device, 3-valve rod, 31-sealing cap, 32-connecting hole, 4-inner housing, 5-seal ring, 6-gas inlet.

Here is further description of the invention in combination with the figures.

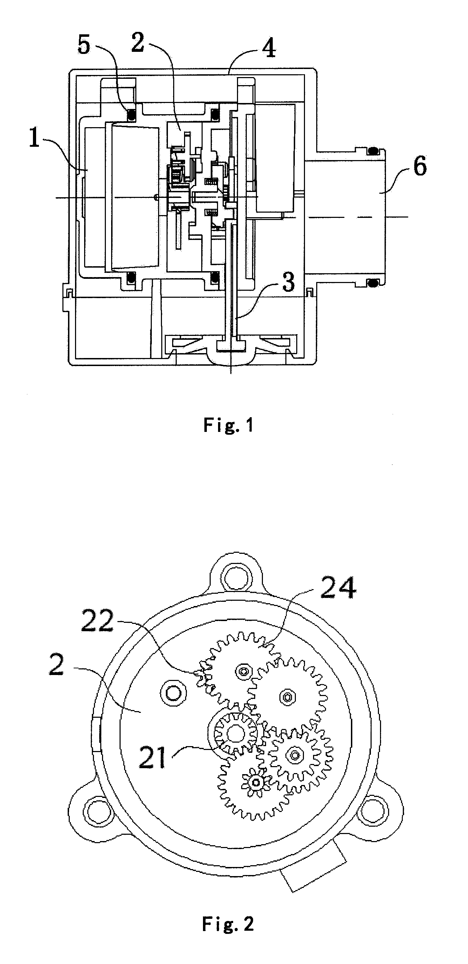

As shown in Figure 1, 2 and 3, one embodiment of the invention is a bidirectional blockage-free gear-driven shutoff valve for gas meter purpose, which includes outer housing in which inner housing is installed; the motor, gear box and valve rod are installed in inner housing as power unit of shutoff valve; one end of the valve rod is equipped with sealing cap, another end is equipped with connecting hole; input gear, output gear and driving gear are installed in the gear box; the output shaft of the motor is coupled to the input gear which is dynamically connected to output gear through multi-stage drive gears, which is used to increase and transmit the power of input gear to output gear through multiple drive gears; the output gear is also dynamically connected to driving gear through drive shaft.

On this basis, a ratchet duplex gear and an incomplete gear need to be installed in the gear box; the ratchet duplex gear is meshed with driving gear and incomplete gear respectively; the incomplete gear is equipped with eccentric shaft which inserts into the connecting hole at the end of valve rod; locking piece is also installed in the gear box; the locking piece is engaged with ratchet duplex gear, which is used to prevent reverse rotation of ratchet duplex gear; reset device is installed on both locking piece and incomplete gear.

In this embodiment, the motor drives input gear to rotate; the input gear is meshed with multiple drive gears to increase the torque of motor output shaft and transmit the torque to output gear which transmits the torque to driving gear through drive shaft; as the driving gear drives ratchet duplex gear to rotate, the ratchet duplex gear drives incomplete gear to rotate; when the incomplete gear rotates, eccentric shaft can drive valve rod to move forward and backward; in order to ensure the linear displacement of valve rod by circumferential movement of eccentric shaft, the connecting hole at the end of valve rod may be strip-type hole to allow eccentric shaft move in strip-type hole; when the incomplete gear rotates to gearless position, the locking piece engaged with ratchet duplex gear can prevent it reversely rotating caused by reset device; so the locking piece is engaged with incomplete gear to maintain the current state of valve rod.

In another embodiment of the invention, in order to prevent corrosion of lines in shutoff valve caused by natural gas, it is better to seal the motor inside of the inner housing and add top cap on gear box, the top cap shall be sealed on gear box. The drive shaft is seal-connected to the driving gear. Furthermore, as shown in figures, the inventor believes the better technical proposal of preventing corrosion of motor interior by gas is to statically and install the motor inside of the inner housing by seal ring on the basis of method mentioned above; extend the output shaft of motor into gear box and install seal ring between output shaft of motor and gear box; the drive shaft is enforced and installed on the top cap of gear box by seal ring and dynamically connected to driving gear.

As mentioned above, the ratchet duplex gear is meshed with locking piece by using structural principle of ratchet, and make the ratch on ratchet incline counter-clockwise, so as to achieve the purpose of "clockwise rotation between ratchet duplex gear and locking piece is unblocked and counter-clockwise rotation is engaged"; however, the gear integrated with ratchet is restrained by ratchet, when it is meshed with incomplete gear and driving gear respectively, i.e. the positive rotation of incomplete gear is unblocked and reverse rotation is engaged, so as to prevent the reverse rotation of the incomplete gear.

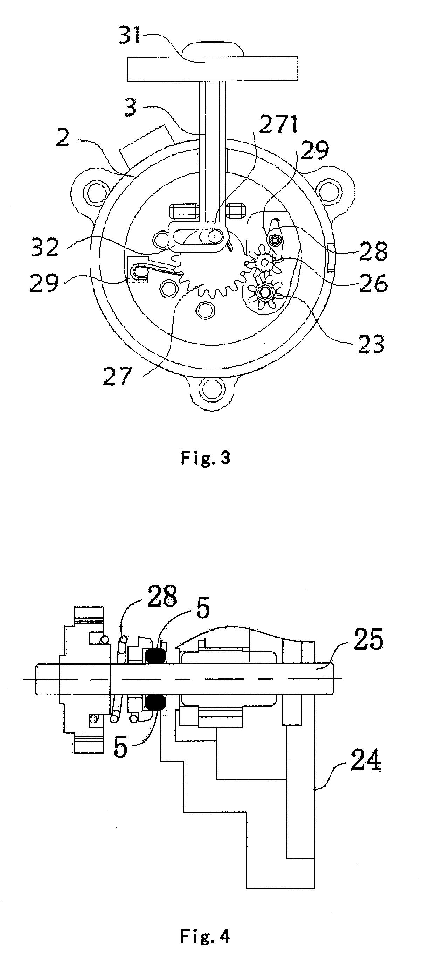

As shown in Figure 3, in a better embodiment of the invention for solving technical problems, in order to ensure the locking piece and incomplete gear can reset after the motor stops operating, the torsion spring can be used as reset device on the locking piece and incomplete gear, which is used to maintain the engaged state of locking piece with ratchet duplex gear and allow the incomplete gear to automatically reset under non-meshed state.

As shown in Figure 2 and Figure 3, the open process of the bidirectional blockage-free gear-driven shutoff valve for gas meter purpose in above embodiment of the invention is as follows: when the output shaft of motor rotates counter-clockwise and transmits the torque to driving gear through input gear, drive gear and output gear, the driving gear will drive the incomplete gear to rotate counter-clockwise through the ratch of ratchet duplex gear; the eccentric shaft on incomplete gear will make the valve rod retract, and the seal cap at head end of valve rod will leave the gas inlet of shutoff valve, then the shutoff valve is opened; when the incomplete gear rotates counter-clockwise to the gearless position, it will be unloaded from the ratchet duplex gear; at the moment, although the driving gear is still driving ratchet duplex gear to rotate clockwise, the ratch of ratchet duplex gear is not engaged with that of incomplete gear, i.e. when the output shaft of motor keeps rotating counter-clockwise, the incomplete gear will keep in such state that the seal cap on head end of valve rod will keep away from inlet and the shutoff valve is in open state. When the motor stops rotating, the torsion spring installed on incomplete gear will drive it to rotate clockwise and engage with the ratch of ratchet duplex gear; the counter-clockwise ratchet fixed on ratchet duplex gear will be locked with the action of locking piece, then the reset torsion spring installed on incomplete gear cannot continue to drive incomplete gear to rotate, i.e. the locking piece locks the ratchet duplex gear by locking the ratchet, and ratchet duplex gear locks the incomplete gear, which prevents the valve rod stretching and keeps the valve in open state.

Likewise, as shown in Figure 2 and Figure 3, the close process of the bidirectional blockage-free gear-driven shutoff valve for gas meter purpose in above embodiment of the invention is as follows: when the motor rotates clockwise and transmits the torque to driving gear through input gear, drive gear and output gear, the driving gear will also rotate clockwise and the ratchet duplex gear will be locked by locking piece; driven by the clockwise rotating force of the driving gear, the ratchet duplex gear rotates with the driving gear shaft through the lower liner plate and disengages with the incomplete gear, in this way it is unlocked; the incomplete gear rotates clockwise with the action of torsion spring, the upper eccentric shaft rotates with incomplete gear and push the valve rod to close the valve. During the above process, the locking piece rotates with ratchet duplex gear around the driving gear shaft through liner plate; when the locking piece touches the inner side of gear box, it will disengage with the ratch of ratchet duplex gear, then the unloading is realized and the valve is closed without blocked rotation; when the output shaft of motor stops rotating, the locking piece will be reset with the action of torsion spring; the electromechanical valve will keep closed until the next counter-clockwise rotation of the motor.

In addition, it is necessary to notice that the words such as "one embodiment", "another embodiment" and "embodiment" mentioned in this manual mean that the specific feature, structure or characteristic related to the embodiment are included in at least one of embodiments briefly described in this application. The same word mentioned in several parts of this manual does not necessarily refer to the same embodiment. Furthermore, the scope of the invention also includes: when one specific feature, structure or characteristic is described with any embodiment, the purpose is to realize such feature, structure or characteristic with other embodiments.

Although the present utility model has been described by referencing to several explanatory embodiments of the present utility model, it should be understood that various modifications and embodiments can be designed by those skilled in the art, and those modifications and embodiments are within the principle scope and spirit of the disclosure of the present application. More specifically, within the scope of the disclosure and the figures, as well as the claims of the present application, various alterations and improvements can be made for the components and/or the layouts of the combined layout of the subject matter. The other usages of the present utility model would be apparent for those skilled in the art, in addition to the alterations and the improvements of the component and/or the layout.

## Claims

1. A bidirectional blockage-free gear-driven shutoff valve for gas meter purpose, including an outer housing, an inner housing is installed in the outer housing, a motor, a gear box and a valve rod are installed in the inner housing; a seal cap is configured at one end of the valve rod, another end of the valve rod is configured with a connecting hole, wherein an input gear, an output gear and a driving gear are installed in the gear box; the output shaft of the motor is coupled to the input gear, the input gear is coupled to, the output gear by means of multi-stage gear-driven for increasing the motive power of the input gear by means of multiple gear-driven and then transmitting the motive power to the output gear; the output gear is also coupled to the driving gear by means of the drive shaft, wherein the ratchet duplex gear and the incomplete gear are also installed in the gear box, the ratchet duplex gear is meshed with the driving gear and the incomplete gear respectively; the incomplete gear is configured with an eccentric shaft which inserts into the connecting hole at the end of the valve rod; a locking piece is also installed inside of the gear box; the locking piece is clamped the ratchet duplex gear, which is used to restrict reverse rotation of the ratchet duplex gear; a reset devices are installed on both the locking piece and the incomplete gear.

2. The bidirectional blockage-free gear-driven shutoff valve of claim 1, wherein the motor is seal-installed inside of the inner housing, and the top cap is configured on the gear box, and the top cap is seal-installed with the gear box; the drive shaft is seal-connected to the driving gear.

3. The bidirectional blockage-free gear-driven shutoff valve of claim 1 or 2, wherein the motor is static seal-installed inside of the inner housing by means of the seal ring.

4. The bidirectional blockage-free gear-driven shutoff valve of any preceding claim, wherein the output shaft of the motor extends into the gear box, and the seal ring is configured between the output shaft of the motor and the gear box; the drive shaft is installed on the top cap of the gear box by means of seal ring of a reinforcement dynamic seal, and coupled to the driving gear.

5. The bidirectional blockage-free gear-driven shutoff valve of any preceding claim, wherein the ratchet duplex gear is formed of the ratchet which is fixed on the gear; the locking piece is clamped the ratchet which is meshed with the incomplete gear and the driving gear respectively.

6. The bidirectional blockage-free gear-driven shutoff valve of claim 5, wherein the ratch on the ratchet is inclined in the direction of counter-clockwise, so as to rotate clockwise only after clamping the locking piece.

7. The bidirectional blockage-free gear-driven shutoff valve of any preceding claim, wherein the reset device installed on the locking piece and the incomplete gear is a torsion spring, which is used to keep the state of clamping between the locking piece and the ratchet duplex gear, and make the incomplete gear automatically reset under the state of non-meshed.
